# EUROPÄISCHE PATENTSCHRIFT

(11) **EP 3 513 094 B1**
(45) Veröffentlichungstag und Bekanntmachung des Hinweises auf die Patenterteilung: **06.08.2025**
(21) Anmeldenummer: 17734263.1
(22) Anmeldetag: 19.06.2017
(51) Int. Cl.: F16G 1/28, F16G 3/10, F16G 5/06, B65G 15/52

(54) **ELASTISCHES ZUGMITTEL UND VERFAHREN ZUR HERSTELLUNG DESSELBEN**
ELASTIC TRACTION MEANS AND METHOD FOR THE PRODUCTION THEREOF
MOYEN DE TRACTION ÉLASTIQUE ET SON PROCÉDÉ DE FABRICATION

(30) Priorität: 16.09.2016 DE 102016217725
(43) Veröffentlichungstag der Anmeldung: 24.07.2019
(73) Patentinhaber: ContiTech Deutschland GmbH, 30175 Hannover (DE)
(72) Erfinder: KUCHARCZYK, Andre, 29499 Gülden (DE); GÖSER, Hubert, 29451 Dannenberg (DE); JIRAUSCHEK, Sebastian, 29456 Hitzacker (DE)
(74) Vertreter: Preusser, Andrea
(86) Internationale Anmeldenummer: PCT/EP2017/064879
(87) Internationale Veröffentlichungsnummer: WO 2018/050301

(56) Entgegenhaltungen:
- WO-A1-2017/204250
- DE-A1- 10 228 992
- DE-B3- 102006 022 011
- GB-A- 2 013 303
- GB-A- 2 139 316
- US-A- 384 465

## Beschreibung

Die Erfindung betrifft ein elastisches Zugmittel, aufweisend mindestens einen Riemenkörper sowie mindestens einen in dem Riemenkörper eingebetteten Zugträger, bei dem der wenigstens eine Zugträger in der Längsrichtung des Zugmittels verlaufend in dem Riemenkörper angeordnet ist, und bei dem der Riemenkörper wenigstens eine Aussparung aufweist.

Derartige Zugmittel bestehen meistens aus polymeren Verbindungen oder aus Stoffmischungen mit elastischen Eigenschaften auf der Grundlage von Kautschuk. Sie werden üblicherweise dazu genutzt, um Antriebskräfte auf nicht geradlinigem Wege zu übertragen, oder um Transport- beziehungsweise Förderaufgaben zu erledigen. Die Kraftübertragung erfolgt bei einem solchen Zugmittel im Wesentlichen mittels in diesen eingebetete Zugträger, wie Corde aus Stahl, Aramid, Polyamid, Polyester oder Carbon. Diese Zugträger erstrecken sich in einem Riemenkörper des Zugmittels in dessen Längsrichtung.

Aus der DE 10 2013 104 764 A1 ist ein Verfahren zur Fertigung eines als Riemen ausgebildeten elastischen Zugmittels mit in einem Riemenkörper eingebetteten Zugträgern bekannt. Darin sind verschiedene polymere Materialien, aus denen derartige Zugmittel aufgebaut sein können sowie verschiedene Werksstoffkonzeptionen von Zugträgern, die darin eingebettet werden können, genannt.

Die Herstellung derartiger Zugmittel erfolgt üblicherweise in einer Rotationsvulkanisationsvorrichtung. Derartige Rotationsvulkanisationsvorrichtungen sind beispielsweise in der DE 1 931 972 A, der DE 26 55 025 C2 und der DE 10 2013 102 148 A1 beschrieben. Demnach wird zur Herstellung eines elastischen Zugmittels zunächst ein Grundmaterial extrudiert. Während der Extrusion laufen in einer Austrittsdüse die Zugträger in das extrudierte, noch warme und relative zähflüssige Material ein. Das so entstandene noch zähflüssige Material mit den Zugträgern wird zwischen einem Band und einem zylindrischen Formrad unter Wärmeentzug zum fertigen Zugmittel geformt, wobei das Band das Formrad über einen Umschlingungswinkel unter Druck umschlingt. Im Falle eines Zahnriemens besitzt das Formrad eine entsprechende Verzahnung, die in den Riemenkörper eingeprägt wird. Gegebenenfalls kann in einem Zwischenschritt ein Gewebe zur weiteren Verstärkung des Zugmittels, beispielsweise im Zahnbereich, auf das Formrad aufgelegt werden.

Bei elastischen Zugmitteln, welche für Förderaufgaben vorgesehen sind, ist es oft erforderlich, dass Mitnehmer, wie Mitnahmenocken oder Mitnahmestollen, zur Mitnahme eines Guts an einen Riemenkörper des Zugmittels angebracht werden müssen. Häufig werden die Mitnehmer mechanisch an dem Riemenkörper befestigt, wobei sie nicht breiter als der Riemenkörper selbst sein dürfen. Dies macht es erforderlich, die Breite und/oder Dicke des Riemenkörpers an den entsprechenden Stellen durch Aussparungen zu reduzieren. Die Aussparungen werden meist durch nachträgliches mechanisches Bearbeiten des Zugmittels erzeugt, beispielsweise durch Stanzen.

Bei einer nachträglichen Bearbeitung eines Zugmittels zur Erzeugung der genannten Aussparungen kommt es allerdings regelmäßig vor, dass Zugträger, welche im Riemenkörper im Bereich der zu erzeugenden Aussparungen verlaufen, durchtrennt werden. Die betreffenden Zugträger verlieren dadurch ihre Funktionsfähigkeit. Wie sich herausgestellt hat, kann dies zu einer wesentlichen Verringerung der gesamten Zugfestigkeit und damit zu einer Verringerung der Zugbelastbarkeit des Zugmittels führen. Ein nachträglicher Bearbeitungsschritt zur Erzeugung von Aussparungen nach der eigentlichen Fertigstellung des Zugmittels in einer Rotationsvulkanisationsvorrichtung verursacht zudem erhöhte Herstellungskosten.

Die DE 10 2012 009 980 A1 zeigt ein elastisches Zugmittel, welches als ein aus einem gewebelagenverstärktem Polymer hergestellter Nockenriemen ausgebildet ist, an dessen Außenseite Funktionselemente für Förderaufgaben angenietet sind. Die Nietverbindungen weisen jeweils auf der Riemeninnenseite ein großflächiges Abstützelement auf, welches durch mechanischen Materialabtrag oder beim Vulkanisieren in den Nockenriemen eingelassen ist. Die Niete sind durch miteinander fluchtende Durchgangslöcher in Riemen, Abstützelement und Funktionselement hindurch gesteckt.

Die DE 10 2013 112 274 B4 zeigt ein als Fördergurt mit einer Gewebeeinlage und mit mehreren Mitnahmestollen ausgebildetes elastischen Zugmittel. Die Mitnahmestollen sind über U-förmige Verbindungselemente mit der Gewebeeinlage verbunden, wobei Schenkel der Verbindungselemente den Fördergurt durchdringen.

Die DE 10 2006 022011 B3 zeigt ein Zugmittel bzw. ein Verfahren zur Herstellung eines Zugmittels gemäß der Präambel der Ansprüche 1 bzw. 12.

Der Erfindung liegt vor diesem Hintergrund die Aufgabe zugrunde, ein elastisches Zugmittel mit darin eingebetteten Zugträgern sowie an dem Zugmittel ausgebildeten Aussparungen vorzustellen, das eine verbesserte Zugfestigkeit aufweist und kostengünstiger herstellbar ist als bekannte technische Lösungen. Außerdem soll ein Verfahren zur Herstellung eines solchen Zugmittels beschrieben werden.

Die Lösung dieser Aufgabe ergibt sich aus den Merkmalen der unabhängigen Ansprüche, während vorteilhafte Ausgestaltungen und Weiterbildungen der Erfindung den jeweils zugeordneten Unteransprüchen entnehmbar sind.

Der Erfindung liegt die Erkenntnis zugrunde, dass bei einem elastischen Zugmittel dessen Zugträger, welche als Festigkeitsträger in der Längsrichtung des Zugmittels verlaufend in diesem eingebettet sind, für die Höhe der von diesen übertragbaren Zugkräfte entscheidend sind. Außerdem ist ersichtlich, dass Aussparungen im Zugmittel, welche in das zuvor fertig vulkanisierte Zugmittel eingebracht werden, einzelne Zugträger im Riemenkörper lokal beschädigen oder gar zerstören können. Weiter ist leicht nachzuvollziehen, dass zusätzliche Bearbeitungsschritte an einem in einem Extrusionsverfahren bereits fertiggestellten Zugmittel zusätzliche Herstellkosten verursachen. Zugträger, welche durch das Einbringen von Aussparungen im Riemenkörper verletzt sind, verlieren ihre Funktionsfähigkeit als Kraftübertrager in dem Zugmittel. Zugmittel, deren Zugträger hingegen bei der Fertigung und Bearbeitung des Zugmittels sämtlich intakt bleiben, weisen eine höhere Belastbarkeit auf. Insbesondere kann ein verbessertes Zugmittel, deren Zugträger sämtlich intakt sind, Güter, welche gegebenenfalls hohe Zugkräfte auf das Zugmittel ausüben können, zuverlässig und ohne Reißgefahr sowie ohne Dauer-überlastung des Zugmittels transportieren.

Die Erfindung geht daher zunächst aus von einem Zugmittel, aufweisend mindestens einen Riemenkörper sowie mindestens einen in dem Riemenkörper eingebetteten Zugträger, bei dem der wenigstens eine Zugträger in der Längsrichtung des Zugmittels verlaufend in dem Riemenkörper angeordnet ist, und bei dem der Riemenkörper wenigstens eine Aussparung aufweist. Zur Lösung der gestellten Aufgabe hinsichtlich der Schaffung eines Zugmittels sieht die Erfindung vor, dass der wenigstens eine Zugträger derartig in dem Riemenkörper angeordnet ist, dass durch die wenigstens eine Aussparung keiner der Zugträger durchtrennt ist.

Zur Begriffsklärung sei angemerkt, dass unter einem Zugträger ein im Verhältnis zu seinem Durchmesser längliches, flexibles Faser- oder Fadenprodukt zur Aufnahme von Zugkräften verstanden wird.

Demnach schlägt die Erfindung ein elastisches Zugmittel mit in einem Riemenkörper in der Längsrichtung des Zugmittels eingebetteten Zugträgern vor, das Aussparungen aufweist, die jedoch die Zugträger nicht durchtrennen. Dadurch ist dem Zugmittel im Vergleich zu bekannten gattungsgemäßen Zugmitteln eine verbesserte Zugfestigkeit verliehen, so dass dieses insgesamt belastbarer ist und vor allem höhere Zugkräfte übertragen kann. Durch die Intaktheit der Zugträger kann auch die Gebrauchsdauer des Zugmittels verlängert werden, wodurch sich Austauschintervalle für diese Zugmittel in Maschinen verlängern und Servicekosten verringern lassen. Das Zugmittel gemäß der Erfindung kann dabei aus Materialien gefertigt sein, die sich bereits bei der konventionellen Zugmittelherstellung bewährt haben.

Gemäß einer bevorzugten Ausführungsform der Erfindung ist vorgesehen, dass die Zugträger als Corde ausgebildet sind, welche im Bereich der wenigstens einen Aussparung in geschwungener Linienführung so um die Aussparung herum geführt sind, dass sie zumindest überwiegend im Abstand zueinander sowie zu dem Rand der Aussparung verlaufen.

Ein Cord besteht aus mehreren, meist zu einer Helix miteinander verdrehten Zugsträngen, welche wiederum jeweils aus einer Vielzahl von einzelnen Fasern bestehen. Derartige Zugträger haben sich bereits in Zugmitteln vielfach bewährt. Sie können zum Beispiel aus einem Glas-Cord, einem Polyethylen-Cord, einem Polyurethan-Cord, einem Carbon-Cord oder/und einem Aramid-Cord bestehen. Der Fachmann mag gezielt geeignete Werkstoffe oder Kombinationen daraus verwenden, um je nach Anwendung und Anforderungen bestimmte gewünschte Eigenschaften wie Zugfestigkeit, Flexibilität, Alterungsbeständigkeit, Säurefestigkeit sowie Preis-Leistungs-Verhältnis zu priorisieren.

Derartige Zugträger beziehungsweise Corde können sanft, also knickfrei, um die Aussparungen im Riemenkörper des Zugmittels herum gelenkt sein, wobei deren Verlauf in Längsrichtung des Zugmittels weitgehend bestehen bleibt. Dadurch bleibt die volle Funktionsfähigkeit der Corde in dem Zugmittel erhalten. Dabei werden weitgehend Abstände aller vorhandenen Corde zueinander eingehalten oder zumindest so wenig wie möglich reduziert, so dass das elastische Grundmaterial des Zugmittels die einzelnen Corde vollständig umgibt und den Raum zwischen benachbarten Corden einnimmt. Durch eine lokale Einengung einzelner Zugträger im Umgebungsbereich der Aussparungen mag zwar eine geringe Inhomogenität im Dichteverhältnis von Zugträgermaterial zu Grundmaterial in den betreffenden Bereichen des Riemenkörpers im Vergleich zu den angrenzenden Bereichen entstehen. Dies wird jedoch gegenüber dem erheblichen Vorteil des vollen Erhalts der Aufnahmefähigkeit von Zugkräften in den betreffenden Bereichen als von untergeordneter Bedeutung beurteilt.

Die Erfindung erlaubt die Ausbildung von verschiedenartigen Aussparungen im Riemenkörper. Dadurch kann der Fachmann das vorgeschlagene Zugmittel an eine Vielzahl verschiedener Anwendungen anpassen. Erfindungsgemäß, ist die wenigstens eine Aussparung an einer längsgerichteten Stirnseite des Riemenkörpers ausgebildet, so dass die Breite des Zugmittels im Bereich der Aussparung der Geometrie der Aussparung entsprechend verringert ist.

Gemäß einer anderen erfindungsgemäßen Ausführungsform kann vorgesehen sein, dass die Dicke des Zugmittels im Bereich der Aussparung um die Tiefe der Aussparung entsprechend verringert ist. Selbstverständlich können auch mehrere gleich oder verschieden ausgebildete Aussparungen an dem Riemenkörper miteinander kombiniert sein.

Ein großer Anwendungsbereich des vorgeschlagenen Zugmittels besteht in Förderaufgaben mittels der eingangs schon beschriebenen Mitnahmevorrichtungen. Gemäß der Erfindung, weist das Zugmittel wenigstens einen Mitnehmer auf, der in die wenigstens eine Aussparung eingesetzt und mit dem Riemenkörper kraftschlüssig verbunden ist.

Demnach kann das Zugmittel beispielsweise als ein Fördergurt oder Förderband zur Mitnahme eines Guts ausgebildet sein. Die dazu erforderlichen Mitnehmer können mit bewährten Verbindungstechniken an dem Riemenkörper in den dafür vorgesehenen Aussparungen befestigt werden. Beispielweise können solche Mitnehmer mit Presspassung in zugeordnete Aussparungen im Riemenkörper eingeklemmt werden. Ebenso sind Klips-Verbindungen von Mitnehmern in den Aussparungen des Riemenkörpers möglich. Ausführbar sind auch stoffschlüssige Verbindungen, wie Klebe- oder Vulkanisationstechniken. Im Falle von Niet- oder Schraubverbindungen zur Befestigung von Mitnehmern in den Aussparungen ist es sinnvoll, dass die betreffenden Zugträger weiträumiger um die Bereiche der Aussparungen herumgeführt sind, um sie nicht zu beschädigen.

Alternativ dazu kann vorgesehen sein, dass die wenigstens eine Aussparung für einen direkten Eingriff und eine direkte Mitnahme eines Guts ausgebildet ist. Demnach können Aussparungen an dem Riemenkörper auch ohne Mitnehmer zum direkten Eingreifen und Mitnehmen eines Guts vorgesehen sein. Auch in diesem Fall wird die Aufnahmefähigkeit von Zugkräften des Zugmittels nicht durch Aussparungen eingeschränkt.

Gemäß einer speziellen Ausführungsform der Erfindung kann vorgesehen sein, dass das Zugmittel mehrere Riemenkörper aufweist, welche parallel zueinander angeordnet sind, wobei an einem der Riemenkörper an seinen beiden längsgerichteten Stirnseiten wenigstens ein erstes Paar von sich gegenüberliegenden Aussparungen ausgebildet ist, wobei an dem anderen der beiden Riemenkörper an dessen beiden längsgerichteten Stirnseiten wenigstens ein zweites Paar von sich stirnseitig gegenüberliegenden Aussparungen ausgebildet ist, und wobei die beiden Riemenkörper durch wenigstens einen stabförmigen Mitnehmer miteinander verbunden sind, welcher mit den beiden sich gegenüberliegenden Paaren von Aussparungen formschlüssig in Eingriff ist.

Demnach sind bei dieser Ausführungsform des Zugmittels mindestens zwei Riemenkörper parallel nebeneinander angeordnet. Diese Riemenkörper sind durch einen stabförmigen Mitnehmer miteinander verbunden. Der Mitnehmer ist hierzu in zugeordnete Aussparungen des Riemenkörpers fest eingeklemmt. Ein derartiges Zugmittel kann beispielsweise in einem Öffnungs- und Schließmechanismus für einen Rollo vorgesehen sein. Der Mitnehmer wird dabei mit den Riemenkörpern des Zugmittels mitbewegt, je nach Anwendungsform gegebenenfalls auch nur linear ohne eine Umlenkung über eine Rolle. Dabei erfährt das Zugmittel eine Zugbelastung, welche durch als Corde ausgebildete Zugträger übertragen wird. Dadurch, dass diejenigen Zugträger, welche an den Rändern der Riemenkörper in Längsrichtung des Zugmittels verlaufen, in intaktem Zustand um die Aussparungen, in die der Mitnehmer eingesetzt wird, herumgeführt sind, kann das Zugmittel hohe Zugkräfte aufnehmen.

Außerdem kann vorgesehen sein, dass die wenigstens eine Aussparung an einem freien Ende des Riemenkörpers ausgebildet ist, wobei die Aussparung als eine Aufnahme für einen als Befestigungsmittel ausgebildeten Mitnehmer zur Befestigung des Zugmittelendes ausgebildet ist. Demnach können Aussparungen auch für eine Endbefestigung eines Zugmittels vorgesehen sein. Intakte Zugträger tragen an einem Ende des Zugmittels dazu bei, die Gefahr des Abreißens eines endseitig befestigten Riemenkörpers bei hoher Zuglast zu minimieren.

Weiter kann vorgesehen sein, dass das Zugmittel als ein Keilriemen, ein Zahnriemen oder als ein Flachriemen ausgebildet ist. Diese Riemen können ringförmig ausgebildet sein oder zwei freie Enden aufweisen.

Zur Herstellung eines erfindungsgemäßen Zugmittels ist ein besonderes Herstellverfahren notwendig. Die Erfindung betrifft daher auch ein Verfahren zur Herstellung eines elastischen Zugmittels mit den Merkmalen wenigstens eines der Vorrichtungsansprüche, bei dem der Riemenkörper in einem Extrusionsverfahren aus einem gummielastischem Material hergestellt wird, bei dem wenigstes ein Zugträger in Längsrichtung des Zugmittels verlaufend in den Riemenkörper eingebettet wird, bei dem anschließend oder gleichzeitig mit dem Einbetten dem Riemenkörper eine gewünschte Geometrie gegeben wird, und bei dem in dem Riemenkörper wenigstens eine Aussparung an zumindest einer längsgerichteten Stirnseite des Riemenkörpers erzeugt wird. Hierbei wird die wenigstens eine Aussparung an dem Riemenkörper bereits während der Geometriegebung des Riemenkörpers erzeugt, wobei keiner der Zugträger in dem Riemenkörper durchtrennt wird.

Bei der Herstellung des Zugmittels gemäß dem genannten Verfahren werden demnach vorgesehene Aussparungen bereits während der Geometriegebung des Riemenkörpers erzeugt. Die Aussparungen werden je nach Anordnung und geometrischer Ausbildung mit einem dazu geeigneten Werkzeug in einer dazu geeigneten Maschine erzeugt. Dadurch kann ein nachträglicher Arbeitsgang wegfallen, wodurch die Herstellungskosten des Zugmittels im Vergleich zu bekannten konventionellen Herstellverfahren verringert sind.

Bei der Erzeugung der Aussparungen wird vorteilhaft keiner der Zugträger in dem Riemenkörper durchtrennt. Dies kann erreicht und sichergestellt werden, indem bei der Erzeugung der wenigstens einen Aussparung diejenigen der Zugträger, deren Verlauf auf den Bereich der Aussparung gerichtet ist, an der Aussparung vorbei geführt und in intaktem Zustand in den Riemenkörper außerhalb der Aussparung eingebettet werden. 9 Gemäß der Erfindung wird ein zugeordneter Mitnehmer in die wenigstens eine erzeugte Aussparung in dem Riemenkörper anschließend eingesetzt und mit dem Riemenkörper kraftschlüssig verbunden.

Dadurch kann das Zugmittel für eine Förderaufgabe ausgebildet werden. Durch das Befestigen von Mitnehmern am Riemenkörper werden keine Zugträger beschädigt, da die Mitnehmer in den dafür vorgesehenen Aussparungen eingesetzt werden, und die Zugträger zuvor bei der Herstellung des Zugmittels an diesen Aussparungen vorbei geführt wurden.

Die Erfindung wird nachstehend anhand von zwei in der beigefügten Zeichnung dargestellten Ausführungsbeispielen näher erläutert. In der Zeichnung zeigt
Fig. 1 eine Draufsicht auf einen in Längsrichtung aufgeschnittenen Abschnitt eines Zugmittels mit den Merkmalen der Erfindung gemäß einer ersten Ausführungsform,
Fig. 2 das Zugmittel gemäß Fig. 1 in einer perspektivischen Seitenansicht, und
Fig. 3 eine perspektivische Ansicht eines Zugmittels gemäß einer zweiten Ausführungsform der Erfindung.

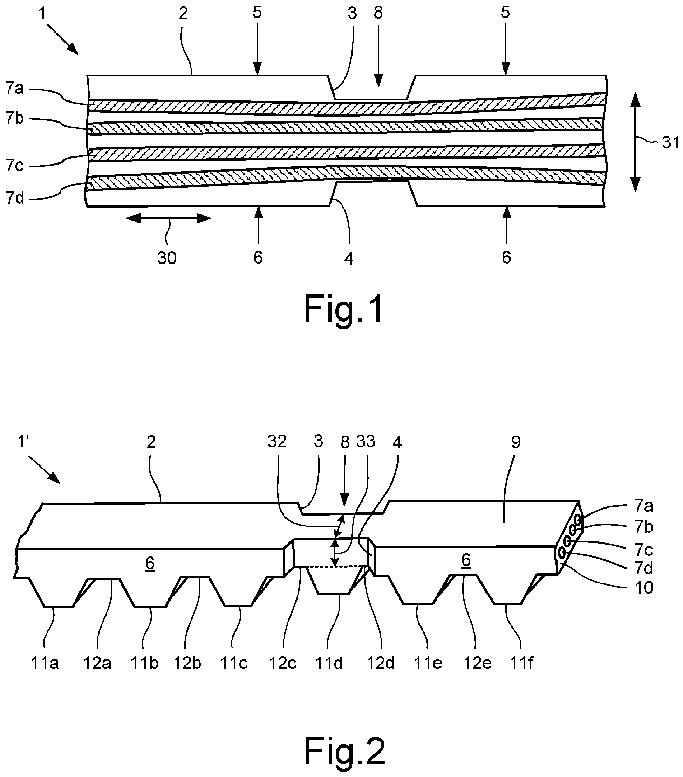

Fig. 1 zeigt demnach einen in Längsrichtung aufgeschnittenen Abschnitt eines vulkanisierten elastischen Zugmittels 1 in Form eines Keilriemens. Wegen der gewählten Schnittebene ist die Keilform nicht erkennbar. Das Zugmittel 1 weist einen Riemenkörper 2 mit einer ersten Aussparung 3 sowie einer zweiten Aussparung 4 auf, welche an einer ersten längsgerichteten Stirnseite 5 beziehungsweise an einer zweiten längsgerichteten Stirnseite 6 des Riemenkörpers 2 ausgebildet sowie gegenüberliegend angeordnet sind. Die beiden Aussparungen 3, 4 weisen jeweils eine trapezförmige Geometrie auf. In den Riemenkörper 2 eingebettet sind ein erster Zugträger 7a, ein zweiter Zugträger 7b, ein dritter Zugträger 7c sowie ein vierter Zugträger 7d. Die vier Zugträger 7a, 7b, 7c, 7d sind als Corde ausgebildet, welche in der Längsrichtung 30 des Zugmittels 1 und im Wesentlichen parallel zueinander verlaufen, wobei diese zueinander beabstandet sind. Hierdurch ist jeder Zugträger 7a, 7b, 7c, 7d von einem elastischen Basismaterial des Zugmittels 1 umgeben.

Im Bereich 8 der Aussparungen 3, 4 ist die Anordnung der vier Zugträger 7a, 7b, 7c, 7d zur Riemenkörpermitte hin etwas verengt. Dabei ist der zur ersten längsgerichteten Stirnseite 5 hin außenliegende, also aussparungsnahe erste Zugträger 7a in geschwungener Linie an der ersten Aussparung 3 vorbeigeführt. Der zur zweiten längsgerichteten Stirnseite 6 hin außenliegende, also aussparungsnahe vierte Zugträger 7d ist in geschwungener Linie an der zweiten Aussparung 4 vorbeigeführt. Die beiden auf die Aussparungen 3, 4 bezogen innen liegenden zweiten und dritten Zugträger 7b, 7c sind in weniger geschwungener Linie, jedoch zueinander und zu ihrem jeweiligen äußeren benachbarten Zugträger 7a, 7d durchgehend im Abstand geführt. Alle vier Zugträger 7a, 7b, 7c, 7d sind intakt. Insbesondere ist der erste Zugträger 7a durch die zu ihm benachbarte erste Aussparung 3 nicht durchtrennt und der vierte Zugträger 7d ist nicht durch die zu ihm benachbarte zweite Aussparung 4 durchtrennt, wodurch das Zugmittel 1 trotz der Aussparungen 3, 4 eine außergewöhnlich hohe Zugfestigkeit aufweist.

Die perspektivische Darstellung in Fig. 2 zeigt ein als Zahnriemen ausgebildetes Zugmittel 1', welche bis auf seine Zähne den gleichen Aufbau aufweist wie das Zugmittel 1 gemäß Fig. 1. Erkennbar weist dieses Zugmittel 1' eine radial außenliegenden Decklage 9 auf, die als Riemenrücken bezeichnet werden kann. In dem Riemenkörper 2 sind vier in diesen eingebettete Zugträger 7a, 7b, 7c, 7d erkennbar, sowie ein auf die Decklage 9 bezogen radial innen ausgebildeter Unterbau 10 des Zugmittels 1'.

Der Unterbau 10 ist mit einer zahnförmigen Profilierung versehen. Zu erkennen sind mehrere Zähne 11a, 11b, 11c, 11d, 11e, 11f und zwischen diesen Zähnen ausgebildete Zahnböden 12a, 12b 12c, 12d, 12e. In dem in Fig. 2 gezeigten beispielhaften Ausschnitt des Zugmittels 1' sind abwechselnd dargestellt ein erster Zahn 11a, ein erster Zahnboden 12a, ein zweiter Zahn 11b, ein zweiter Zahnboden 12b, ein dritter Zahn 11c, ein dritter Zahnboden 12c, ein vierter Zahn 11d, ein vierter Zahnboden 12d, ein fünfter Zahn 11e, ein fünfter Zahnboden 12e sowie ein sechster Zahn 11f.

Wie Fig. 2 weiter zeigt, ist die Breite 32 des Riemenkörpers 2 im Bereich 8 der beiden Aussparungen 3, 4 deren Tiefe in Querrichtung 31 des Zugmittels 1' entsprechend reduziert. Die in diesem Bereich 8 jeweils zu einem Teil angeordneten dritten und vierten Zahnböden 12c, 12d sowie der vollständig in diesem Bereich 8 angeordnete vierte Zahn 11d sind in ihrer Konturierung durch die beiden Aussparungen 3, 4 entsprechend verkürzt. Genau gesagt ist der vierte Zahn 11d in seiner Breite schmaler als die übrigen dargestellten Zähne 11a, 11b, 11c, 11e, 11f. Die Tiefe der Aussparungen 3, 4 bestimmt die verbleibende Dicke 33 des Riemenkörpers 2. So können die Aussparungen 3, 4 den Riemenkörper 2 wie dargestellt vollständig durchdringen oder jeweils als eine Einsenkung ausgebildet sein.

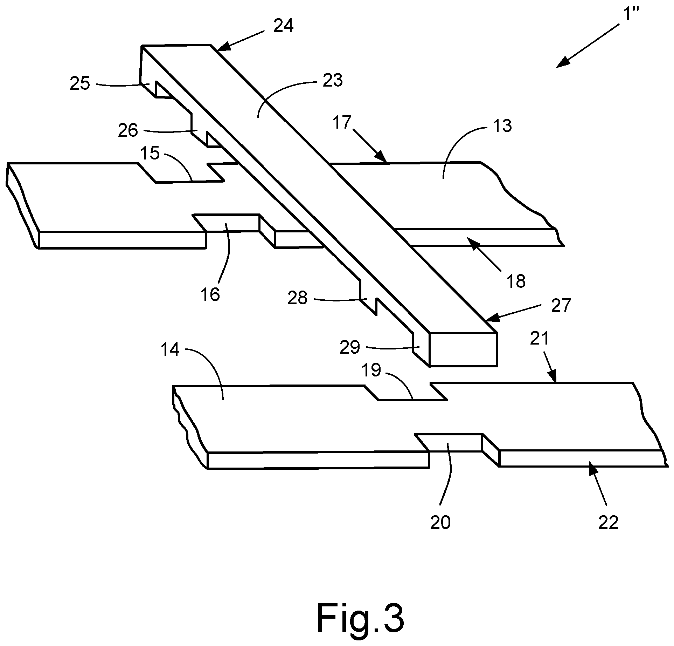

Fig. 3 zeigt ein Ausführungsbeispiel mit einem Zugmittel 1", welches abweichend von dem Zugmittel 1, 1' gemäß Fig. 1 und Fig. 2 nicht mit lediglich einem Riemenkörper 2 sondern aus zwei Riemenkörpern 13, 14 gebildet ist. Diese Riemenkörper 13, 14 haben eine rechteckige Querschnittsgeometrie. Möglich wären auch Ausführungsformen mit drei oder mehr Riemenkörpern 13, 14. Demnach sind bei dem Ausführungsbeispiel gemäß Fig. 3 ein erster Riemenkörper 13 sowie ein zweiter Riemenkörper 14 mit deren längsgerichteten Stirnseiten 17, 18; 21, 22 parallel zueinander angeordnet. Der erste Riemenkörper 13 weist eine dritte Aussparung 15 sowie eine vierte Aussparung 16 auf, welche an einer dritten Stirnseite 17 beziehungsweise an einer vierten Stirnseite 18 ausgebildet sowie gegenüberliegend angeordnet sind. Die dritten und vierten Aussparungen 15, 16 weisen jeweils eine rechteckförmige Geometrie auf. Der zweite Riemenkörper 14 ist dazu baugleich ausgebildet. Er weist eine fünfte Aussparung 19 sowie eine sechste Aussparung 20 auf, welche an einer fünften Stirnseite 21 und an einer sechsten Stirnseite 22 des zweiten Riemenkörpers 14 ausgebildet sowie gegenüberliegend angeordnet sind. Die fünften und sechsten Aussparungen 19, 20 weisen ebenfalls jeweils eine rechteckförmigen Geometrie auf.

Die dritten und vierten Aussparungen 15, 16 des ersten Riemenkörpers 13 sowie die fünften und sechsten Aussparungen 19, 20 des zweiten Riemenkörpers 14 sind zur Aufnahme eines gemeinsamen Mitnehmers 23 vorgesehen.

Fig. 3 zeigt den Mitnehmer 23 in einem dafür vorbereiteten, jedoch noch nicht in der ersten und zweiten Riemenkörper 13, 14 eingesetzten Zustand. Der Mitnehmer 23 ist als ein Stab ausgebildet, mittels dem die beiden Riemenkörpern 13, 14 miteinander verbindbar sind. Dazu weist der Mitnehmer 23 an seinem ersten Ende 24 einen ersten Vorsprung 25 und einen zweiten Vorsprung 26 zum formschlüssigen Eingreifen in die zugeordneten dritten und vierten Aussparungen 15, 16 des ersten Riemenkörpers 13 sowie an seinem zweiten Ende 27 einen dritten Vorsprung 28 und einen vierten Vorsprung 29 zum formschlüssigen Eingreifen in die zugeordneten fünften und sechsten Aussparungen 19, 20 des zweiten Riemenkörpers 14 auf.

Der Formschluss zwischen dem Mitnehmer 23 und den beiden Riemenkörpern 13, 14 kann beispielsweise mittels Presspassung erfolgen, so dass der Mitnehmer 23 im montierten Zustand fest eingeklemmt ist und sowohl in Längsrichtung als auch in Querrichtung des Zugmittels 1'' die beiden Riemenkörper 13, 14 miteinander koppelt. Der Mitnehmer 23 kann zum Mitnehmen eines nicht dargestellten Guts vorgesehen sein.

Die Riemenkörper 2, 13, 14 gemäß den Figuren 1 bis 3 werden vorteilhaft in einem Extrusionsverfahren hergestellt. Dabei werden die vier Zugträger 7a, 7b, 7c, 7d in Längsrichtung 30 des Zugmittels 1, 1', 1" verlaufend in den Riemenkörper 2, 13, 14 eingebettet. Anschließend oder gleichzeitig wird dem ersten Riemenkörper 2, 13, 14 seine Profilierung als Flachriemen, Keilriemen oder Zahnriemen gegeben. Dabei werden vorteilhaft gleichzeitig die beiden Aussparungen 3, 4, 15, 16, 19, 20 des jeweiligen Riemenkörpers 2, 13, 14 erzeugt. Keiner der vier Zugträger 7a, 7b, 7c, 7d in dem jeweiligen Riemenkörper 2, 13, 14 wird dabei durchtrennt. Die Aussparungen 3, 4, 15, 16, 19, 20 werden entsprechend der in den Figuren 1 bis 3 gezeigten beispielhaften Anordnung und geometrischen Ausbildung mit einem hier nicht näher beschriebenen jedoch dazu geeigneten Werkzeug in einer hierfür geeigneten Maschine erzeugt.

### Bezugszeichenliste

- 1: Zugmittel, Keilriemen
- 1': Zugmittel, Zahnriemen
- 1": Zugmittel, mit zwei Flachriemen
- 2: Riemenkörper
- 3: Erste Aussparung
- 4: Zweite Aussparung
- 5: Erste Stirnseite
- 6: Zweite Stirnseite
- 7a: Erster Zugträger
- 7b: Zweiter Zugträger
- 7c: Dritter Zugträger
- 7d: Vierter Zugträger
- 8: Aussparungsbereich
- 9: Decklage
- 10: Unterbau
- 11a: Erster Zahn
- 11b: Zweiter Zahn
- 11c: Dritter Zahn
- 11d: Vierter Zahn
- 11e: Fünfter Zahn
- 11f: Sechster Zahn
- 12a: Erster Zahnboden
- 12b: Zweiter Zahnboden
- 12c: Dritter Zahnboden
- 12d: Vierter Zahnboden
- 12e: Fünfter Zahnboden
- 13: Erster Riemenkörper
- 14: Zweiter Riemenkörper
- 15: Dritte Aussparung
- 16: Vierte Aussparung
- 17: Dritte Stirnseite
- 18: Vierte Stirnseite
- 19: Fünfte Aussparung
- 20: Sechste Aussparung
- 21: Fünfte Stirnseite
- 22: Sechste Stirnseite
- 23: Mitnehmer
- 24: Erstes Ende des Mitnehmers
- 25: Erster Vorsprung am Mitnehmer
- 26: Zweiter Vorsprung am Mitnehmer
- 27: Zweites Ende des Mitnehmers
- 28: Dritter Vorsprung am Mitnehmer
- 29: Vierter Vorsprung am Mitnehmer
- 30: Längsrichtung des Zugmittels
- 31: Querrichtung des Zugmittels
- 32: Breite des Zugmittels bzw. Riemenkörpers
- 33: Dicke des Riemenkörpers

## Patentansprüche

1. Elastisches Zugmittel (1, 1', 1"), aufweisend mindestens einen Riemenkörper (2, 13, 14) sowie mindestens einen in dem Riemenkörper (2, 13, 14) eingebetteten Zugträger (7a, 7b, 7c, 7d), bei dem der wenigstens eine Zugträger (7a, 7b, 7c, 7d) in der Längsrichtung (30) des Zugmittels (1, 1', 1") verlaufend in dem Riemenkörper (2, 13, 14) angeordnet ist, und bei dem der Riemenkörper (2, 13, 14) wenigstens eine Aussparung (3, 4, 15, 16, 19, 20) aufweist, wobei der wenigstens eine Zugträger (7a, 7b, 7c, 7d) derartig in dem Riemenkörper (2, 13, 14) angeordnet ist, dass durch die wenigstens eine Aussparung (3, 4, 15, 16, 19, 20) keiner der Zugträger (7a, 7b, 7c, 7d) durchtrennt ist, wobei das Zugmittel (1, 1', 1") wenigstens einen Mitnehmer (23) zur Mitnahme eines Guts aufweist, der in die wenigstens eine Aussparung (3, 4, 15, 16, 19, 20) eingesetzt und mit dem Riemenkörper (2, 13, 14) kraftschlüssig verbunden ist,
**dadurch gekennzeichnet, dass** die wenigstens eine Aussparung (3, 4, 15, 16, 19, 20) an zumindest einer längsgerichteten Stirnseite (5, 6, 17, 18, 21, 22) des Riemenkörpers (2, 13, 14) in Querrichtung (31) senkrecht zur Längsrichtung (30) und senkrecht zur Dicke (33) die Breite (32) oder die Breite (32) und Dicke (33) des Riemenkörpers (2,13,14) reduziert.

2. Zugmittel nach Anspruch 1, **dadurch gekennzeichnet, dass** die Zugträger (7a, 7b, 7c, 7d) als Corde ausgebildet sind, welche im Bereich der wenigstens einen Aussparung (3, 4, 15, 16, 19, 20) in geschwungener Linienführung so um die Aussparung (3, 4, 15, 16, 19, 20) herum geführt sind, dass sie zumindest überwiegend im Abstand zueinander sowie zu dem Rand der Aussparung (3, 4, 15, 16, 19, 20) verlaufen.

3. Zugmittel nach Anspruch 1 oder 2, **dadurch gekennzeichnet, dass** die wenigstens eine Aussparung (3, 4, 15, 16, 19, 20) an einer längsgerichteten Stirnseite (5, 6, 17, 18, 21, 22) des Riemenkörpers (2, 13, 14) ausgebildet ist, so dass die Breite (32) des Zugmittels (1, 1', 1") im Bereich der Aussparung (3, 4, 15, 16, 19, 20) der Geometrie der Aussparung (3, 4, 15, 16, 19, 20) entsprechend verringert ist.

4. Zugmittel nach einem der Ansprüche 1 bis 3, **dadurch gekennzeichnet, dass** die Dicke (33) des Zugmittels (1, 1', 1") im Bereich der Aussparung (3, 4, 15, 16, 19, 20) um die Tiefe der Aussparung (3, 4, 15, 16, 19, 20) entsprechend verringert ist.

5. Zugmittel nach einem der Ansprüche 1 bis 4, **dadurch gekennzeichnet,**
**dass** das Zugmittel (1'') mehrere Riemenkörper (13, 14) aufweist, welche parallel zueinander angeordnet sind, wobei an einem der Riemenkörper (13, 14) an seinen beiden längsgerichteten Stirnseiten (17, 18) wenigstens ein erstes Paar von sich gegenüberliegenden Aussparungen (15, 16) ausgebildet ist, wobei an dem anderen der beiden Riemenkörper (13, 14) an dessen beiden längsgerichteten Stirnseiten (21, 22) wenigstens ein zweites Paar von sich stirnseitig gegenüberliegenden Aussparungen (19, 20) ausgebildet ist, und wobei die beiden Riemenkörper (13, 14) durch wenigstens einen stabförmigen Mitnehmer (23) miteinander verbunden sind, welcher mit den beiden sich gegenüberliegenden Paaren von Aussparungen (15, 16; 19, 20) formschlüssig in Eingriff ist.

6. Zugmittel nach einem der Ansprüche 1 bis 5, **dadurch gekennzeichnet, dass** die wenigstens eine Aussparung (3, 4, 15, 16, 19, 20) an einem freien Ende des Riemenkörpers (2, 13, 14) ausgebildet ist, wobei die Aussparung (3, 4, 15, 16, 19, 20) als eine Aufnahme für einen als Befestigungsmittel ausgebildeten Mitnehmer (23) zur Befestigung des Zugmittelendes ausgebildet ist.

7. Zugmittel nach einem der Ansprüche 1 bis 5, **dadurch gekennzeichnet, dass** das Zugmittel (1) als ein Keilriemen ausgebildet ist.

8. Zugmittel nach einem der Ansprüche 1 bis 5, **dadurch gekennzeichnet, dass** das Zugmittel (1') als ein Zahnriemen ausgebildet ist.

9. Zugmittel nach einem der Ansprüche 1 bis 5, **dadurch gekennzeichnet, dass** das Zugmittel (1'') als ein Flachriemen ausgebildet ist.

10. Zugmittel nach einem der Ansprüche 7 oder 9, **dadurch gekennzeichnet, dass** das als Flachriemen, Keilriemen, oder als Zahnriemen ausgebildete Zugmittel (1, 1', 1") ringförmig ausgebildet ist.

11. Zugmittel nach einem der Ansprüche 7 oder 10, **dadurch gekennzeichnet, dass** das als Flachriemen, Keilriemen, oder als Zahnriemen ausgebildete Zugmittel (1, 1', 1") zwei freie Enden aufweist.

12. Verfahren zur Herstellung eines elastischen Zugmittels (1, 1', 1'') mit den Merkmalen von wenigstens einem der Ansprüche 1 bis 11, bei dem der Riemenkörper (2, 13, 14) in einem Extrusionsverfahren aus einem gummielastischem Material hergestellt wird, bei dem wenigstes ein Zugträger (7a, 7b, 7c, 7d) in Längsrichtung (30) des Zugmittels (1, 1', 1'') verlaufend in den Riemenkörper (2, 13, 14) eingebettet wird, bei dem anschließend oder gleichzeitig mit dem Einbetten dem Riemenkörper (2, 13, 14) eine gewünschte Geometrie gegeben wird, und bei dem die wenigstens eine Aussparung (3, 4, 15, 16, 19, 20) bereits während der Geometriegebung des Riemenkörpers (2, 13, 14) erzeugt wird, wobei keiner der Zugträger (7a, 7b, 7c, 7d) in dem Riemenkörper (2, 13, 14) durchtrennt wird,
**dadurch gekennzeichnet, dass** in dem Riemenkörper (2, 13, 14) wenigstens eine in Querrichtung (31) senkrecht zur Längsrichtung (30) und senkrecht zur Dicke (33) die Breite (32) oder die Breite (32) und Dicke (33) des Riemenkörpers (2, 13, 14) reduzierende Aussparung (3, 4, 15, 16, 19, 20) an zumindest einer längsgerichteten Stirnseiten (5, 6, 17, 18, 21, 22) des Riemenkörpers (2, 13, 14) erzeugt wird.

13. Verfahren nach Anspruch 12, **dadurch gekennzeichnet, dass** bei der Erzeugung der wenigstens einen Aussparung (3, 4, 15, 16, 19, 20) diejenigen der Zugträger (7a, 7b, 7c, 7d), deren Verlauf auf den Bereich (8) der Aussparung (3, 4, 15, 16, 19, 20) gerichtet ist, an der Aussparung (3, 4, 15, 16, 19, 20) vorbei geführt und in intaktem Zustand in den Riemenkörper (2, 13, 14) außerhalb der Aussparung (3, 4, 15, 16, 19, 20) eingebettet werden.

14. Verfahren nach Anspruch 12 oder 13, **dadurch gekennzeichnet, dass** in die wenigstens eine erzeugte Aussparung (3, 4, 15, 16, 19, 20) in dem Riemenkörper (2, 13, 14) anschließend ein zugeordneter Mitnehmer (23) eingesetzt und mit dem Riemenkörper (2, 13, 14) kraftschlüssig verbunden wird.

## Claims

1. Elastic traction means (1, 1', 1"), comprising at least one belt body (2, 13, 14), and at least one tension member (7a, 7b, 7c, 7d) embedded in the belt body (2, 13, 14), in which the at least one tension member (7a, 7b, 7c, 7d) is disposed in the belt body (2, 13, 14) so as to extend in the longitudinal direction (30) of the traction means (1, 1', 1"), and in which the belt body (2, 13, 14) has at least one recess (3, 4, 15, 16, 19, 20), wherein the at least one tension member (7a, 7b, 7c, 7d) is disposed in the belt body (2, 13, 14) in such a manner that none of the tension members (7a, 7b, 7c, 7d) is severed by the at least one recess (3, 4, 15, 16, 19, 20), wherein the traction means (1, 1', 1") for entraining a material has at least one driver (23) which is inserted into the at least one recess (3, 4, 15, 16, 19, 20) and connected in a force-fitting manner to the belt body (2, 13, 14), **characterized in that** the at least one recess (3, 4, 15, 16, 19, 20) on at least one longitudinally oriented end side (5, 6, 17, 18, 21, 22) of the belt body (2, 13, 14) reduces the width (32), or the width (32) and the thickness (33), of the belt body (2, 13, 14) in the transverse direction (31) perpendicular to the longitudinal direction (30) and perpendicular to the thickness (33).

2. Traction means according to Claim 1, **characterized in that** the tension members (7a, 7b, 7c, 7d) are formed as cords which in the region of the at least one recess (3, 4, 15, 16, 19, 20) are guided in curved lines about the recess (3, 4, 15, 16, 19, 20) in such a way that they extend at least largely at a mutual spacing and at a spacing from the periphery of the recess (3, 4, 15, 16, 19, 20).

3. Traction means according to Claim 1 or 2, **characterized in that** the at least one recess (3, 4, 15, 16, 19, 20) on a longitudinally oriented end side (5, 6, 17, 18, 21, 22) of the belt body (2, 13, 14) is formed in such a way that the width (32) of the traction means (1, 1', 1") in the region of the recess (3, 4, 15, 16, 19, 20) is reduced so as to correspond to the geometry of the recess (3, 4, 15, 16, 19, 20).

4. Traction means according to one of Claims 1 to 3, **characterized in that** the thickness (33) of the traction means (1, 1', 1") in the region of the recess (3, 4, 15, 16, 19, 20) is reduced so as to correspond to the depth of the recess (3, 4, 15, 16, 19, 20).

5. Traction means according to one of Claims 1 to 4, **characterized in that** the traction means (1") has a plurality of belt bodies (13, 14) which are disposed so as to be mutually parallel, wherein at least one first pair of mutually opposite recesses (15, 16) is formed on one of the belt bodies (13, 14) on its two longitudinally oriented end sides (17, 18), wherein at least a second pair of recesses (19, 20), whose end faces are mutually opposite, is formed on the other of the two belt bodies (13, 14) on its two longitudinally oriented end sides (21, 22), and wherein the two belt bodies (13, 14) are connected to one another by at least one rod-shaped driver (23) which engages in a form-fitting manner with the two mutually opposite pairs of recesses (15, 16; 19, 20).

6. Traction means according to one of Claims 1 to 5, **characterized in that** the at least one recess (3, 4, 15, 16, 19, 20) is formed on a free end of the belt body (2, 13, 14), wherein the recess (3, 4, 15, 16, 19, 20) is designed as a receptacle for a driver (23) formed as a fastening means for fastening the end of the traction means.

7. Traction means according to one of Claims 1 to 5, **characterized in that** the traction means (1) is formed as a V-belt.

8. Traction means according to one of Claims 1 to 5, **characterized in that** the traction means (1') is formed as a timing belt.

9. Traction means according to one of Claims 1 to 5, **characterized in that** the traction means (1") is formed as a flat belt.

10. Traction means according to one of Claims 7 or 9, **characterized in that** the traction means (1, 1', 1") formed as a flat belt, a V-belt, or as a timing belt is of annular shape.

11. Traction means according to one of Claims 7 or 10, **characterized in that** the traction means (1, 1', 1") formed as a flat belt, a V-belt, or as a timing belt has two free ends.

12. Method for producing an elastic traction means (1, 1', 1") having the features of at least one of Claims 1 to 11, wherein the belt body (2, 13, 14) is produced from a rubber-elastic material by an extrusion method in which at least one tension member (7a, 7b, 7c, 7d) is embedded in the belt body (2, 13, 14) so as to extend in the longitudinal direction (30) of the traction means (1, 1', 1"), in which a desired geometry is imparted to the belt body (2, 13, 14) subsequently to or simultaneously with the embedding, and in which the at least one recess (3, 4, 15, 16, 19, 20) is already generated while imparting the geometry of the belt body (2, 13, 14), wherein none of the tension members (7a, 7b, 7c, 7d) is severed in the belt body (2, 13, 14), **characterized in that** at least one recess (3, 4, 15, 16, 19, 20) which reduces the width (32), or the width (32) and the thickness (33), of the belt body (2, 13, 14) in the transverse direction (31) perpendicular to the longitudinal direction (30) and perpendicular to the thickness (33) is generated in the belt body (2, 13, 14) on at least one longitudinally oriented end side (5, 6, 17, 18, 21, 22) of the belt body (2, 13, 14).

13. Method according to Claim 12, **characterized in that**, when generating the at least one recess (3, 4, 15, 16, 19, 20), those of the tension members (7a, 7b, 7c, 7d) whose profile is oriented towards the region (8) of the recess (3, 4, 15, 16, 19, 20) are guided past the recess (3, 4, 15, 16, 19, 20) and embedded into the belt body (2, 13, 14) in an intact state outside the recess (3, 4, 15, 16, 19, 20).

14. Method according to Claim 12 or 13, **characterized in that** subsequently an assigned driver (23) is inserted into the at least one recess (3, 4, 15, 16, 19, 20) generated in the belt body (2, 13, 14) and is connected to the belt body (2, 13, 14) in a force-fitting manner.

## Revendications

1. Moyen de traction élastique (1, 1', 1"), présentant au moins un corps de courroie (2, 13, 14) ainsi qu'au moins un support de traction (7a, 7b, 7c, 7d) noyé dans le corps de courroie (2, 13, 14), dans lequel l'au moins un support de traction (7a, 7b, 7c, 7d) est agencé dans le corps de courroie (2, 13, 14) en s'étendant dans la direction longitudinale (30) du moyen de traction (1, 1', 1"), et dans lequel le corps de courroie (2, 13, 14) présente au moins un évidement (3, 4, 15, 16, 19, 20), l'au moins un support de traction (7a, 7b, 7c, 7d) étant agencé dans le corps de courroie (2, 13, 14) de telle sorte qu'aucun des supports de traction (7a, 7b, 7c, 7d) n'est sectionné à travers l'au moins un évidement (3, 4, 15, 16, 19, 20), le moyen de traction (1, 1', 1") présentant au moins un entraîneur (23) pour l'entraînement d'un produit, qui est inséré dans l'au moins un évidement (3, 4, 15, 16, 19, 20) et est relié par adhérence au corps de courroie (2, 13, 14), **caractérisé en ce que** l'au moins un évidement (3, 4, 15, 16, 19, 20) réduit la largeur (32) ou la largeur (32) et l'épaisseur (33) du corps de courroie (2, 13, 14) sur au moins un côté frontal orienté longitudinalement (5, 6, 17, 18, 21, 22) du corps de courroie (2, 13, 14) dans la direction transversale (31) perpendiculairement à la direction longitudinale (30) et perpendiculairement à l'épaisseur (33).

2. Moyen de traction selon la revendication 1, **caractérisé en ce que** les supports de traction (7a, 7b, 7c, 7d) sont réalisés sous forme de cordes qui, dans la zone de l'au moins un évidement (3, 4, 15, 16, 19, 20), sont guidées en lignes courbes autour de l'évidement (3, 4, 15, 16, 19, 20) de telle sorte qu'elles s'étendent au moins principalement à distance les unes des autres ainsi que du bord de l'évidement (3, 4, 15, 16, 19, 20).

3. Moyen de traction selon la revendication 1 ou 2, **caractérisé en ce que** l'au moins un évidement (3, 4, 15, 16, 19, 20) est réalisé sur un côté frontal orienté longitudinalement (5, 6, 17, 18, 21, 22) du corps de courroie (2, 13, 14), de telle sorte que la largeur (32) du moyen de traction (1, 1', 1") dans la zone de l'évidement (3, 4, 15, 16, 19, 20) est réduite conformément à la géométrie de l'évidement (3, 4, 15, 16, 19, 20).

4. Moyen de traction selon l'une quelconque des revendications 1 à 3, **caractérisé en ce que** l'épaisseur (33) du moyen de traction (1, 1', 1") dans la zone de l'évidement (3, 4, 15, 16, 19, 20) est réduite conformément à la profondeur de l'évidement (3, 4, 15, 16, 19, 20).

5. Moyen de traction selon l'une quelconque des revendications 1 à 4, **caractérisé en ce que** le moyen de traction (1") présente plusieurs corps de courroie (13, 14) qui sont agencés parallèlement les uns aux autres, au moins une première paire d'évidements (15, 16) opposés étant réalisée sur l'un des corps de courroie (13, 14) sur ses deux côtés frontaux orientés longitudinalement (17, 18), au moins une deuxième paire d'évidements (19, 20) opposés frontalement étant réalisée sur l'autre des deux corps de courroie (13, 14) sur ses deux côtés frontaux orientés longitudinalement (21, 22), et les deux corps de courroie (13, 14) étant reliés l'un à l'autre par au moins un entraîneur (23) en forme de tige, qui est en prise par complémentarité de forme avec les deux paires opposées d'évidements (15, 16 ; 19, 20).

6. Moyen de traction selon l'une quelconque des revendications 1 à 5, **caractérisé en ce que** l'au moins un évidement (3, 4, 15, 16, 19, 20) est réalisé à une extrémité libre du corps de courroie (2, 13, 14), l'évidement (3, 4, 15, 16, 19, 20) étant réalisé sous la forme d'un logement pour un entraîneur (23) réalisé sous forme de moyen de fixation pour fixer l'extrémité du moyen de traction.

7. Moyen de traction selon l'une quelconque des revendications 1 à 5, **caractérisé en ce que** le moyen de traction (1) est réalisé sous la forme d'une courroie trapézoïdale.

8. Moyen de traction selon l'une quelconque des revendications 1 à 5, **caractérisé en ce que** le moyen de traction (1') est réalisé sous la forme d'une courroie dentée.

9. Moyen de traction selon l'une quelconque des revendications 1 à 5, **caractérisé en ce que** le moyen de traction (1") est réalisé sous la forme d'une courroie plate.

10. Moyen de traction selon l'une quelconque des revendications 7 ou 9, **caractérisé en ce que** le moyen de traction (1, 1', 1") réalisé sous forme de courroie plate, de courroie trapézoïdale ou de courroie dentée est réalisé sous forme annulaire.

11. Moyen de traction selon l'une quelconque des revendications 7 ou 10, **caractérisé en ce que** le moyen de traction (1, 1', 1") réalisé sous forme de courroie plate, de courroie trapézoïdale ou de courroie dentée présente deux extrémités libres.

12. Procédé de fabrication d'un moyen de traction élastique (1, 1', 1") avec les caractéristiques d'au moins l'une quelconque des revendications 1 à 11, dans lequel le corps de courroie (2, 13, 14) est fabriqué dans un procédé d'extrusion à partir d'un matériau ayant l'élasticité du caoutchouc, dans lequel au moins un support de traction (7a, 7b, 7c, 7d) est noyé dans le corps de courroie (2, 13, 14) en s'étendant dans la direction longitudinale (30) du moyen de traction (1, 1', 1"), dans lequel, ensuite ou en même temps que le noyage, une géométrie souhaitée est attribuée au corps de courroie (2, 13, 14), et dans lequel l'au moins un évidement (3, 4, 15, 16, 19, 20) est déjà produit pendant l'attribution de la géométrie au corps de courroie (2, 13, 14), aucun des supports de traction (7a, 7b, 7c, 7d) n'étant sectionné dans le corps de courroie (2, 13, 14), **caractérisé en ce que**, dans le corps de courroie (2, 13, 14), au moins un évidement (3, 4, 15, 16, 19, 20) réduisant la largeur (32) ou la largeur (32) et l'épaisseur (33) du corps de courroie (2, 13, 14) dans la direction transversale (31) perpendiculairement à la direction longitudinale (30) et perpendiculairement à l'épaisseur (33) est produit sur au moins un côté frontal orienté longitudinalement (5, 6, 17, 18, 21, 22) du corps de courroie (2, 13, 14).

13. Procédé selon la revendication 12, **caractérisé en ce que**, lors de la production de l'au moins un évidement (3, 4, 15, 16, 19, 20), ceux des supports de traction (7a, 7b, 7c, 7d) dont le tracé est dirigé vers la zone (8) de l'évidement (3, 4, 15, 16, 19, 20), sont guidés devant l'évidement (3, 4, 15, 16, 19, 20) et sont noyés à l'état intact dans le corps de la courroie (2, 13, 14) à l'extérieur de l'évidement (3, 4, 15, 16, 19, 20).

14. Procédé selon la revendication 12 ou 13, **caractérisé en ce qu'**un entraîneur (23) associé est ensuite inséré dans l'au moins un évidement (3, 4, 15, 16, 19, 20) produit dans le corps de courroie (2, 13, 14) et est relié par adhérence au corps de courroie (2, 13, 14).
